# FASCICULE DE BREVET EUROPEEN

(11) **EP 0 993 972 B1**
(45) Date de publication et mention de la délivrance du brevet: **05.03.2003**
(21) Numéro de dépôt: 99402505.4
(22) Date de dépôt: 12.10.1999
(51) Int. Cl.: B60G 17/033, B60G 21/06, B60G 17/04, F15B 1/26

(54) **Système de commande d'une suspension hydropneumatique de véhicule automobile**
Steuersystem für hydropneumatische Federung in Autos
Command system for hydropneumatic suspension on automobile

(30) Priorité: 13.10.1998 FR 9812804
(43) Date de publication de la demande: 19.04.2000
(73) Titulaire: AUTOMOBILES PEUGEOT, 75116 Paris (FR); AUTOMOBILES CITROEN, 92200 Neuilly-sur-Seine (FR)
(72) Inventeur: Lamorlette, Bruno, 78800 Houilles (FR)
(74) Mandataire: Thinat, Michel

(56) Documents cités:
- EP-A- 0 816 142
- FR-A- 2 726 791
- US-A- 3 068 023
- PATENT ABSTRACTS OF JAPAN vol. 011, no. 188 (M-599), 17 juin 1987 (1987-06-17) & JP 62 015108 A (MAZDA MOTOR CORP;OTHERS: 01), 23 janvier 1987 (1987-01-23)

## Description

L'invention concerne un système de commande d'une suspension hydropneumatique de véhicule automobile, du type comprenant un dispositif d'alimentation de la suspension en fluide hydraulique, pourvu d'une source de fluide sous pression, et une pluralité de conduits hydrauliques, et des éléments d'établissement de voies d'écoulement de fluide entre la suspension et le dispositif d'alimentation à travers lesdits conduits, l'ensemble des éléments d'établissement desdites voies d'écoulement étant monté sur un seul bloc de support monté sur le véhicule et les conduits hydrauliques étant prévus dans ce bloc.

Un système de ce type est connu par exemple par le document FR-A-2750652. Bien que ce système permette de supprimer un certain nombre d'organes par rapport aux systèmes hydromécaniques antérieurement connus, le bloc lui-même reste relativement encombrant car il comprend une source de pression qui se présente sous la forme d'un accumulateur monté sur le bloc, une pompe extérieure au bloc pour alimenter cet accumulateur et un certain nombre d'éléments liés à ce dernier, tels qu'un clapet anti-retour, une vis de purge etc. Par conséquent, ce système connu présente toujours l'inconvénient d'un encombrement à l'intérieur du véhicule qui est gênant.

La présente invention a pour but de diminuer cet encombrement en proposant un bloc hydraulique plus simple et plus compact.

Pour atteindre ce but, le système selon l'invention est caractérisé en ce que la source de fluide hydraulique est un dispositif tel qu'une pompe, intégré au bloc hydraulique.

Selon une autre caractéristique de l'invention, la pompe est actionnée par un moteur tel qu'un moteur électrique lui-même monté sur le bloc.

Selon encore une autre caractéristique, le système objet de l'invention comporte un calculateur monté sur le bloc.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels:

La figure 1 est une vue schématique fonctionnelle d'un agencement de bloc hydraulique de commande d'une suspension hydropneumatique de véhicule automobile selon la présente invention.

La figure 2 illustre, schématiquement, l'agencement de bloc de commande selon la figure 1 dans son environnement.

La figure 3 est une vue en coupe axiale d'une pompe selon l'invention, intégrée au bloc hydraulique.

Les figures 4A, 4B, 4C sont des vues schématiques illustrant un mode de montage de pièces.

La figure 5 est une vue montrant l'utilisation du principe de montage montré sur les figures 4A à 4C dans l'agencement selon la figure 1.

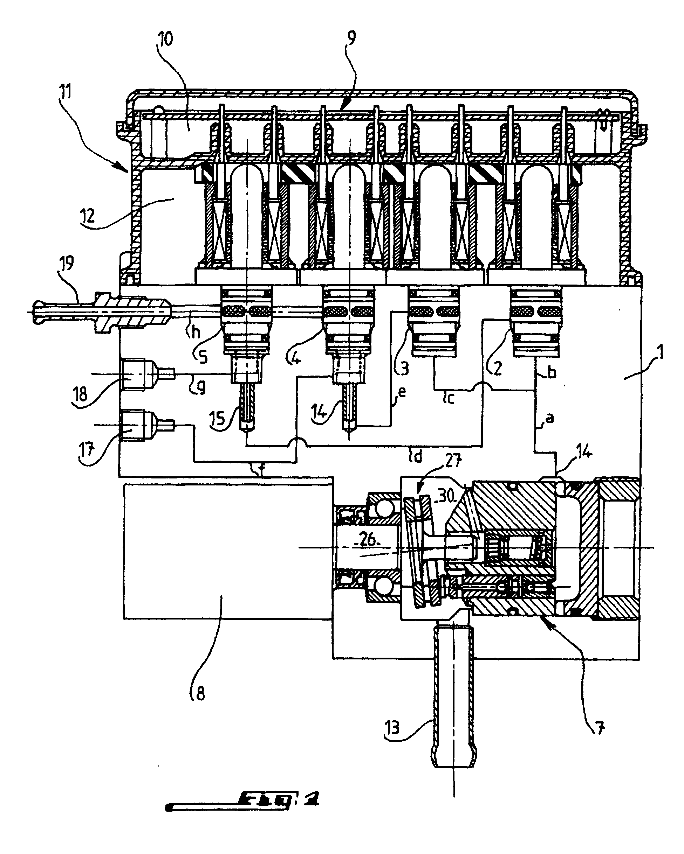

En se reportant à la figure 1, on constate qu'un agencement de commande d'une suspension hydropneumatique de véhicule automobile selon la présente invention comporte essentiellement un bloc hydraulique 1, quatre électrovannes (2 à 5) fixées sur le bloc 1, une pompe 7 intégrée au bloc 1, un moteur avantageusement électrique 8 d'entraînement de la pompe, ainsi qu'un dispositif calculateur 9 disposé dans un compartiment supérieur 10 d'un carter 11 qui est monté sur la face supérieure du bloc 1 et loge, dans un compartiment inférieur 12, les quatre électrovannes 2 à 5. Le moteur 8 est monté sur le bloc 1. L'entrée d'alimentation en fluide de la pompe est désignée par la référence 13.

Le dispositif d'électrovannes comporte deux électrovannes d'admission, désignées par les références 2 et 3 et deux électrovannes d'échappement portant les références 4 et 5. A chacune de ces électrovannes 4 et 5 est intégré un clapet anti-affaissement respectivement 14 et 15 permettant de maintenir l'assiette du véhicule.

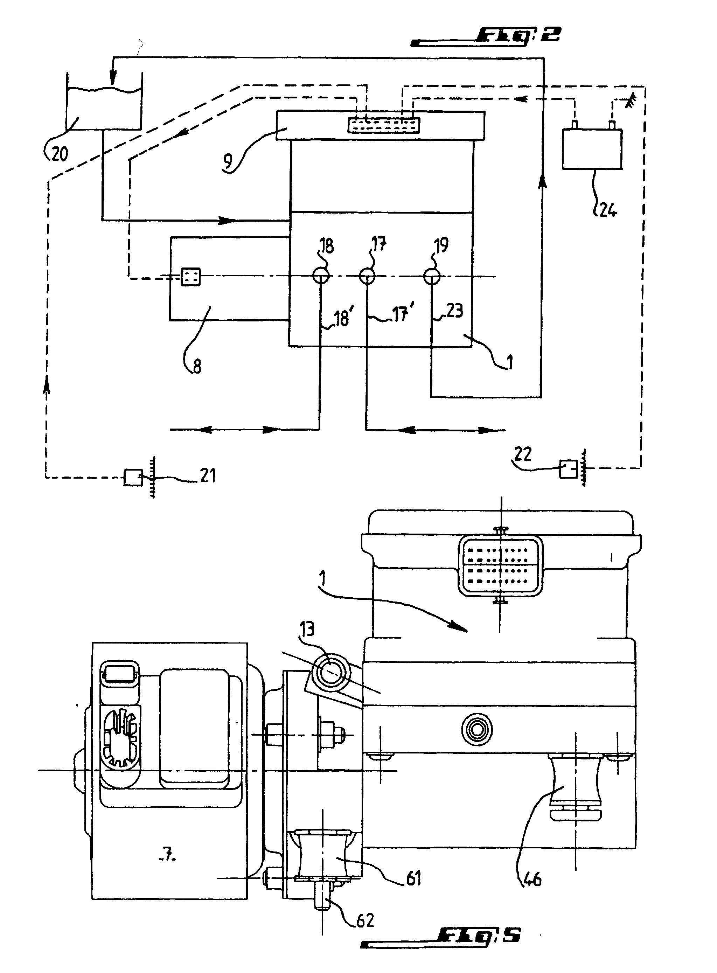

Les entrées des électrovannes d'admission 2 et 3 sont reliées, par un dispositif de conduits a, b et c internes au bloc, à la sortie 16 de la pompe 7. Des conduits internes d, e connectent les sorties des électrovannes 2 et 3 aux entrées des clapets anti-affaissement 14, 15 dont les sorties sont reliées par des conduits respectivement f et g aux raccords 17, 18 des circuits de suspension arrière et avant 17', 18' (figure 2). Les sorties des électrovannes 4 et 5 sont reliées par un canal interne h à un raccord 19 communiquant avec le circuit de retour 23. La figure 2 montre encore en 20 le réservoir de fluide hydraulique et en 21 et 22 des capteurs de la position en hauteur du véhicule. On notera que le réservoir 20 peut être intégré au bloc 1.

Avant de décrire plus en avant certains détails constructifs de la présente invention, on expliquera ci-après brièvement le fonctionnement de l'agencement de commande selon l'invention, en se référant aux figures 1 et 2 :

Lorsque le véhicule est plus bas que l'assiette de référence, le calculateur 9 reçoit une information via les capteurs avant et arrière respectivement 21 et 22 (figure 2) et commande le moteur électrique 8 et l'ouverture des électrovannes d'admission 2 et 3. Le moteur 8 entraîne la pompe 7 et le fluide refoulé par cette dernière, après être passé à travers les électrovannes ouvertes 2 et 3, soulève les clapets anti-affaissement 14 et 15 et s'écoule, à travers les raccords 17, 18 des circuits de suspension arrière et avant 17' et 18' jusqu'aux suspensions en faisant ainsi remonter le véhicule. Une fois l'assiette de référence atteinte, le calculateur 9 commande l'arrêt du moteur 8 et la fermeture des électrovannes d'admission 2 et 3.

Lorsque le véhicule est plus haut que l'assiette de référence, le calculateur reçoit une information des capteurs 21 et 22 et commande les électrovannes d'échappement 4 et 5. Ces électrovannes étant ouvertes, le liquide des suspensions, en passant à travers les raccords 17 et 18, s'écoule à travers les électrovannes et retourne au réservoir 20 par le raccord 19. Ainsi, l'assiette du véhicule est abaissée. Une fois le niveau désiré atteint, le calculateur commande la fermeture des électrovannes.

On notera cependant que la commande se fait essieu par essieu et que, suivant les cas, le calculateur peut ne commander qu'une seule des électrovannes 2 et 3 ou 4 et 5.

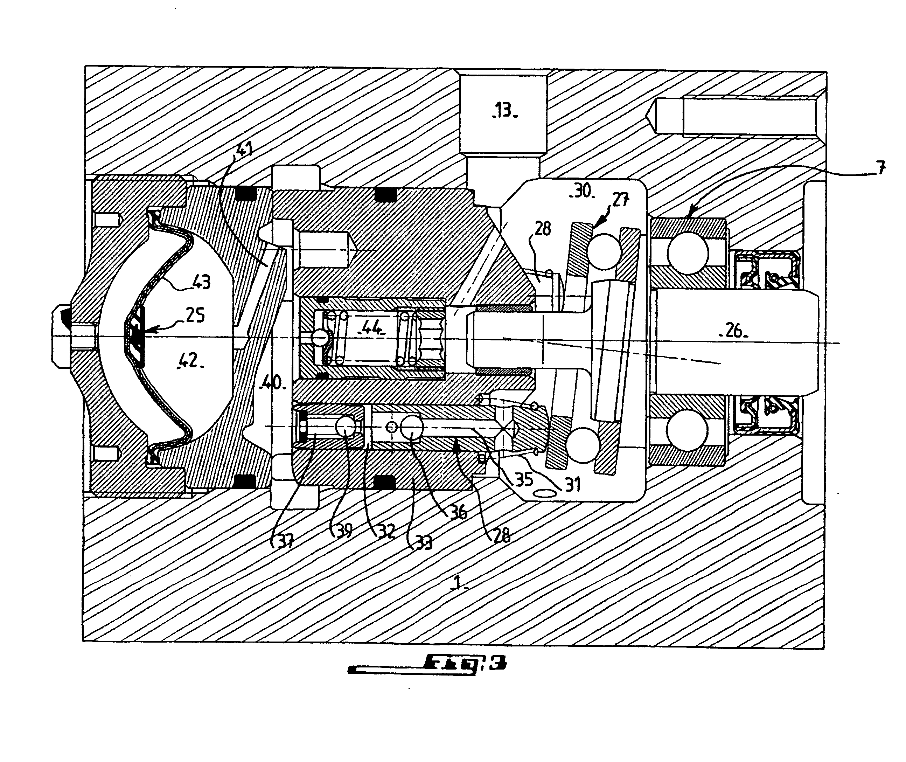

En se référant aux figures 3 à 5, on va décrire ci-après certaines particularités constructives de l'invention.

La figure 3 montre plus en détail la pompe 7. Cette pompe est du type à pistons dont la structure générale est connue en soi mais dont la particularité réside dans le fait qu'un accumulateur 25 est associé à la pompe pour filtrer les pulsations de celle-ci. L'accumulateur est monté sur le carter de la pompe.

Sur la figure, les numéros de référence 26, 27 et 28 désignent respectivement l'arbre de la pompe, le plateau incliné de celle-ci et les pistons qui sont déplacés axialement par le plateau lorsque celui-ci est entraîné en rotation.

Plus précisément, le plateau 27 tourne dans une chambre d'admission 30 de la pompe. Les pistons 28 sont orientés parallèlement à l'axe de la pompe et sont maintenus, par des ressorts 31, par leurs parties de tête en appui contre le plateau. L'extrémité avant de chaque piston contribue à délimiter une chambre 32 dans la chemise 33 de la pompe. Cette chambre de refoulement 32 communique avec la chambre d'admission 30 par un dispositif de canaux 35 internes aux pistons 28 et pourvus d'un clapet anti-retour dont l'organe mobile est formé par une bille 36. La chambre de refoulement 32 communique d'autre part, par un canal 37 pourvu d'un clapet anti-retour à bille 39, avec la chambre de sortie 40 de la pompe. Cette dernière est en communication par un canal 41 avec la cavité interne 42 de l'accumulateur 25 pourvu d'une membrane interne 43 et ainsi adapté pour filtrer les pulsations de la pompe. Pour compléter encore la description de la pompe, la référence 44 désigne un clapet de sécurité situé dans l'axe de la pompe.

Concernant le fonctionnement de la pompe, lorsque les pistons 28 se déplacent vers la droite sur la figure 3, du liquide peut s'écouler de la chambre d'admission 30 de la pompe à travers les dispositifs de canaux 35 et les clapets dont les billes 36 sont soulevées de leurs sièges, dans les chambres 32. Lorsque les pistons sont déplacés par le plateau incliné tournant 27 vers la gauche, du liquide est refoulé des chambres 32 dans la chambre de sortie 40, les pulsations étant amorties par l'accumulateur 25.

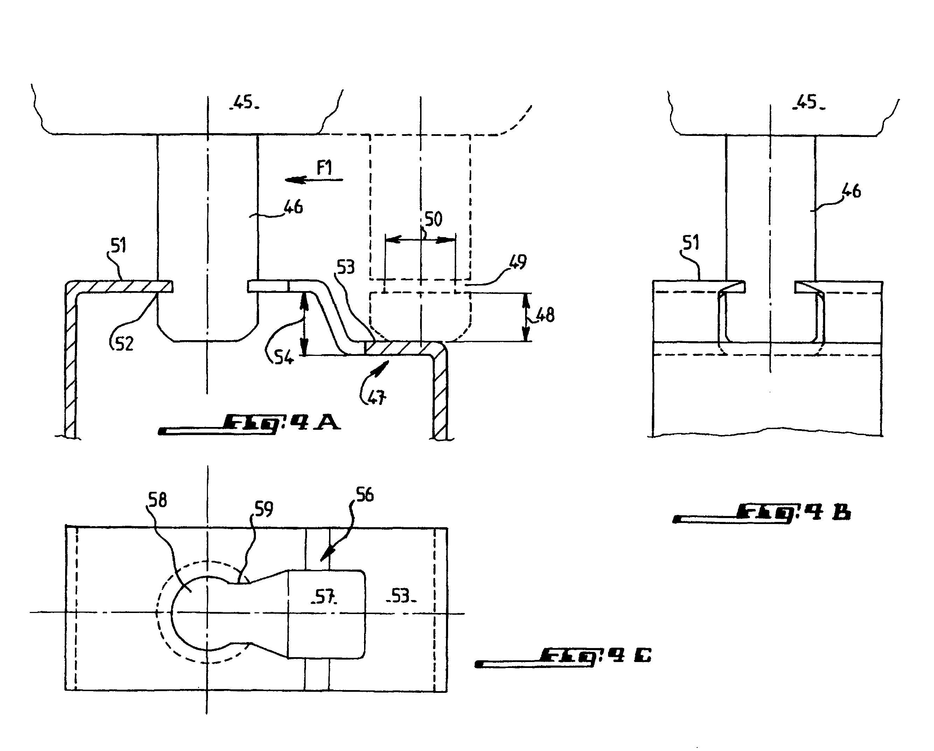

En se référant aux figures 4A, 4B, et 4C on va maintenant décrire de façon générale un mode de fixation dont l'utilisation dans le cadre de l'invention sera décrite ensuite en se reportant à la figure 5.

Les figures 4A, 4B et 4C illustrent un mode de fixation d'une première pièce 45 comportant un plot en caoutchouc 46 sur une seconde pièce de support 47. Le plot comporte, à une distance indiquée en 48 de son extrémité libre, dans sa surface périphérique, une gorge 49 d'une largeur et d'une profondeur prédéterminée. Le diamètre au niveau du fond de la gorge est indiqué par la référence 50.

Le support 47 est formé, dans sa partie de réception du plot 46, par une paroi 51 d'une épaisseur correspondant à la largeur de la gorge 49 et comporte, en avant de l'endroit de fixation 52 du plot 46, indiqué par une ligne pleine, une face de pose 53 abaissée par rapport à l'endroit de fixation 52 de façon que la distance 54 entre la face inférieure de ce dernier et la face de pose soit au moins légèrement supérieure à la distance 48 indiquée pour le plot 46. Une découpe 56 est pratiquée dans le support 47 et s'étend de l'endroit de fixation 52 jusqu'à la face de pose 53. Cette découpe comporte une première partie 57 adjacente à la face de pose 53, de forme sensiblement rectangulaire et d'une largeur supérieure au diamètre 50 du fond de la gorge 49 du plot, une portion 58 de fixation du plot, de forme sensiblement circulaire et d'un diamètre correspondant au diamètre 50 du fond de la gorge, à l'endroit de fixation, et une zone intermédiaire 59 présentant, adjacente à la partie 58, une largeur légèrement inférieure au diamètre 50. Pour la fixation de la pièce 45 sur le support 47, il suffit de déplacer le plot 46 en translation à partir de la face de pose 53 en direction de la flèche F1 dans la découpe 56 jusque dans la zone 58 de cette dernière. Pendant ce déplacement, les bords de la découpe s'engagent dans la gorge 49. Le plot est retenu dans sa position de fixation par la partie rétrécie 59 de la découpe. L'engagement des bords de la découpe du support 47 dans la gorge empêche aussi tout mouvement vertical de ce plot.

La figure 5 illustre l'utilisation du mode de fixation illustré sur les figures 4A, 4B, et 4C pour le montage de l'agencement montré sur la figure 1 sur un support non représenté. Le dispositif de fixation comporte, sur chaque côté de l'agencement, deux plots de fixation, réalisés sous forme de plots anti-vibrations, dont l'un, portant la référence 61, est du type classique à vis et écrou, la vis étant montrée en saillie en 62, tandis que l'autre est formé par un plot de montage rapide 46 tel que montré sur les figures 4A, 4B, et 4C. Grâce à l'invention, le montage de l'agencement sur son support permet de supprimer deux des quatre plots de fixation à vis et écrous classiques. La suppression de ces vis apporte un gain économique et permet la fixation à des endroits inaccessibles pour un outil de montage et un montage facile et rapide, grâce à la forme du support, avec sa surface de prépositionnement.

## Revendications

1. Système de commande d'une suspension hydropneumatique de véhicule automobile, du type comprenant un dispositif d'alimentation de la suspension du véhicule en fluide hydraulique, pourvu d'une source de fluide sous pression, et une pluralité de conduits hydrauliques (a, b, c, d, e, f, g, h), et des éléments (2, 3, 4, 5) d'établissement de voies d'écoulement de fluide entre la suspension et le dispositif d'alimentation à travers lesdits conduits, l'ensemble des éléments d'établissement desdites voies d'écoulement étant monté sur un seul bloc (1) de support monté sur le véhicule et les conduits hydrauliques (a, b, c, d, e, f, g, h) étant prévus dans ce bloc (1), **caractérisé en ce que** la source de fluide hydraulique est un dispositif (7) tel qu'une pompe, intégré au bloc hydraulique (1).

2. Système selon la revendication 1, **caractérisé en ce que** la pompe (7) est actionnée par un moteur (8) tel qu'un moteur électrique, lui-même monté sur le bloc (1).

3. Système selon l'une des revendications 1 ou 2, **caractérisé en ce qu'**il comporte un calculateur (9) qui est monté sur le bloc (1).

4. Système selon l'une des revendications 1 à 3, **caractérisé en ce qu'**il comprend, pour assurer une fonction anti-affaissement, des clapets anti-affaissement (14, 15) de mise en communication de la suspension avec la pompe (7) ou pour l'isolement de cette dernière de la suspension.

5. Système selon la revendication 4, **caractérisé en ce qu'**il comprend, pour accomplir une fonction de correction de la hauteur, les clapets anti-affaissement avant et arrière (14, 15) précités, et des électrovannes (2 à 5), pour la suspension avant et arrière permettant d'envoyer du fluide dans les suspensions et d'en retirer à travers les clapets anti-affaissement.

6. Système selon l'une des revendications précédentes, **caractérisé en ce qu'**il comprend, pour l'admission du fluide dans la suspension, un premier conduit (a, b ou c) à l'intérieur du bloc (1), reliant la pompe (7) à une électrovanne d'admission (2 ou 3) et un deuxième conduit (d ou e), à l'intérieur du bloc (1), reliant ladite électrovanne d'admission à un circuit de suspension avant ou arrière à travers un clapet anti-affaissement (14, 15).

7. Système selon la revendication 4 et l'une des revendications 5 ou 6, **caractérisé en ce qu'**il comprend, pour l'évacuation du fluide de la suspension, des conduits (f, g), à l'intérieur du bloc (1), reliant un circuit de suspension avant ou arrière (17', 18') à une électrovanne (4 ou 5) à travers l'un des clapets anti-affaissement (14 ou 15), et un autre conduit (h) à l'intérieur du bloc (1), reliant l'électrovanne d'échappement (4 ou 5) à un circuit de retour (23) au réservoir (20).

8. Système selon la revendication 5 et l'une des revendications 6 ou 7, **caractérisé en ce que** les clapets anti-affaissement (14, 15) sont intégrés aux électrovannes d'échappement (4, 5).

9. Système selon l'une des revendications précédentes, **caractérisé en ce que** le bloc de support (1) est pourvu de plots anti-vibrations (46, 61).

10. Système selon la revendication 9, **caractérisé en ce qu'**au moins un (46) des plots anti-vibrations sert à la fixation rapide du bloc sur un support (47).

11. Système selon la revendication 10, **caractérisé en ce que** le plot anti-vibrations de fixation rapide (46) précité comprend un plot en caoutchouc qui est fixé sur le support et comporte dans sa surface périphérique une gorge (49) destiné à recevoir des bords d'une découpe (56) pratiquée dans le support (47) du bloc (1) et qui est configurée pour l'engagement et la fixation du plot (46) dans le support.

## Patentansprüche

1. Steuereinrichtung zum Steuern einer hydropneumatischen Aufhängung eines Kraftfahrzeugs, vom Typ mit einer Vorrichtung zum Versorgen der Fahrzeugaufhängung mit Hydraulikfluid, die mit einer Druckfluidquelle versehen ist, und mit einer Mehrzahl von Hydraulikleitungen (a, b, c, d, e, f, g, h) und Elementen (2, 3, 4, 5) zum Herstellen von Fluiddurchflusswegen zwischen der Aufhängung und der Versorgungsvorrichtung durch die genannten Leitungen, wobei sämtliche Elemente zum Herstellen der genannten Durchflusswege an einem einzigen Tragblock (1) angebracht sind, der am Fahrzeug montiert ist, und wobei die Hydraulikleitungen (a, b, c, d, e, f, g, h) in diesem Block (1) vorgesehen sind, **dadurch gekennzeichnet, dass** die Hydraulikfluidquelle eine Vorrichtung (7) ist, wie etwa eine Pumpe, die im Hydraulikblock (1) integriert ist.

2. Einrichtung nach Anspruch 1, **dadurch gekennzeichnet, dass** die Pumpe (7) von einem Motor (8), etwa einem Elektromotor, betätigt wird, der seinerseits am Block (1) gelagert ist.

3. Einrichtung nach Anspruch 1 oder 2, **dadurch gekennzeichnet, dass** sie einen Rechner (9) enthält, der am Block (1) angebracht ist.

4. Einrichtung nach einem der Ansprüche 1 bis 3, **dadurch gekennzeichnet, dass** sie zum Gewährleisten einer Senkungsschutzfunktion Senkungsschutzventile (14, 15) zum Verbinden der Aufhängung mit der Pumpe (7) oder zum Trennen derselben von der Aufhängung enthält.

5. Einrichtung nach Anspruch 4, **dadurch gekennzeichnet, dass** sie zum Erfüllen einer Höhenkorrekturfunktion das genannte vordere und hintere Senkungsschutzventil (14, 15) und Magnetventile (2 bis 5) für die vordere und die hintere Aufhängung enthält, die es ermöglichen, durch die Senkungsschutzventile Fluid in die Aufhängungen einzuleiten und daraus wieder herauszuführen.

6. Einrichtung nach einem der vorangehenden Ansprüche, **dadurch gekennzeichnet, dass** sie zum Einlass des Fluids in die Aufhängung einer erste Leitung (a, b bzw. c) innerhalb des Blocks (1), welche die Pumpe (7) mit einem Einlassmagnetventil (2 bzw. 3) verbindet, und eine zweite Leitung (d bzw. e) innerhalb des Blocks (1) enthält, welche das genannte Einlassmagnetventil durch ein Senkungsschutzventil (14, 15) mit einem hinteren bzw. vorderen Aufhängungskreis verbindet.

7. Einrichtung nach Anspruch 4 und nach Anspruch 5 oder 6, **dadurch gekennzeichnet, dass** sie zum Abführen des Fluids aus der Aufhängung Leitungen (f, g) innerhalb des Blocks (1) enthält, welche einen vorderen bzw. hinteren Aufhängungskreis (17', 18') durch eines der Senkungsschutzventile (14 bzw. 15) mit einem Magnetventil (4 bzw. 5) verbinden, und eine weitere Leitung (h) innerhalb des Blocks (1) umfasst, welche das Auslassmagnetventil (4 bzw. 5) mit einem Rücklauf (23) zum Behälter (20) verbindet.

8. Einrichtung nach Anspruch 5 und nach Anspruch 6 oder 7, **dadurch gekennzeichnet, dass** die Senkungsschutzventile (14, 15) in den Auslassmagnetventilen (4, 5) integriert sind.

9. Einrichtung nach einem der vorangehenden Ansprüche, **dadurch gekennzeichnet, dass** der Tragblock (1) mit Antivibrationsklötzen (46, 61) versehen ist.

10. Einrichtung nach Anspruch 9, **dadurch gekennzeichnet, dass** zumindest einer (46) der Antivibrationsklötze zur Schnellbefestigung des Blocks am Träger (47) dient.

11. Einrichtung nach Anspruch 10, **dadurch gekennzeichnet, dass** der vorgenannte Antivibrationsklotz zur Schnellbefestigung (46) einen Gummiklotz enthält, der am Träger befestigt ist und in seiner Umfangsfläche eine Nut (49) aufweist, die dazu bestimmt ist, Ränder eines Ausschnitts (56) aufzunehmen, der im Träger (47) des Blocks (1) ausgeführt ist und zum Eingreifen und Befestigen des Klotzes (46) im Träger ausgebildet ist.

## Claims

1. A control system for a hydropneumatic suspension of a motor vehicle of the type comprising a device for supplying hydraulic fluid to the vehicle suspension, provided with a source of fluid under pressure and a plurality of hydraulic conduits (a, b, c, d, e, f, g, h) and elements (2, 3, 4, 5) for establishing fluid flow paths between the suspension and the supply device through said conduits, the totality of the elements for establishing said flow paths being mounted on a single support block (1) and the hydraulic conduits (a, b, c, d, e, f, g, h) being provided in this block (1), **characterised in that** the hydraulic fluid source is a device (7), such as a pump, integrated into the hydraulic block (1).

2. A system according to claim 1, **characterised in that** the pump (7) is driven by a motor (8) such as an electric motor, itself mounted on the block (1).

3. A system according to one of claims 1 or 2, **characterised in that** it comprises a calculator (9) which is mounted on the block (1).

4. A system according to one of claims 1 to 3, **characterised in that** to provide an anti-collapse function it comprises anti-collapse valves (14, 15) for connecting the suspension to the pump (7) or for isolating the latter from the suspension.

5. A system according to claim 4, **characterised in that** to provide a level-correcting function it comprises the above-mentioned front and rear anti-collapse valves (14, 15) and solenoid valves (2 to 5) for the front and rear suspension allowing fluid to be supplied to the suspensions and to be withdrawn the therefrom through the anti-collapse valves.

6. A system according to one of the preceding claims, **characterised in that** to admit fluid to the suspension it comprises a first conduit (a, b or c) inside the block (1) connecting the pump (7) to an inlet solenoid valve (2 or 3), and a second conduit (d or e) inside the block (1) connecting said inlet solenoid valve to a front or rear suspension circuit to through an anti-collapse valve (14, 15).

7. A system according to claim 4 and one of claims 5 or 6, **characterised in that** to evacuate the fluid from the suspension it comprises conduits (f, g) inside the block (1) connecting a front or rear suspension circuit (17', 18') to a solenoid valve (4 or 5) through one of the anti-collapse valves (14 or 15), and another conduit (h) inside the block (1) connecting the outlet solenoid valve (4 or 5) to a return circuit (23) to the reservoir (20).

8. A system according to claim 5 and one of claims 6 or 7, **characterised in that** the anti-collapse valves (14, 15) are integrated into the outlet solenoid valves (4, 5).

9. A system according to one of the preceding claims, **characterised in that** the support block (1) is provided with anti-vibration mounts (46, 61).

10. A system according to claim 9, **characterised in that** at least one (46) of the anti-vibration mounts is used for rapid fixing of the block to a support (47).

11. A system according to claim 10, **characterised in that** the above-mentioned anti-vibration mount for rapid fixing (46) comprises a rubber block which is fixed to the support and includes in its peripheral surface a groove (49) adapted to receive edges of a cut-out (56) formed in the support (47) of the block (1) and configured for engagement of the mount (46) in the support and fixing of said mount (46) in same.
